# EUROPÄISCHE PATENTSCHRIFT

(11) **EP 1 782 889 B1**
(45) Veröffentlichungstag und Bekanntmachung des Hinweises auf die Patenterteilung: **18.01.2012**
(21) Anmeldenummer: 06022187.6
(22) Anmeldetag: 24.10.2006
(51) Int. Cl.: B05B 12/14, B05B 7/14, B05B 7/24, A01M 7/00

(54) **Tragbares Sprühgerät**
Portable sprayer
Pulvérisateur portable

(30) Priorität: 05.11.2005 DE 102005052845; 10.08.2006 DE 102006037483
(43) Veröffentlichungstag der Anmeldung: 09.05.2007
(73) Patentinhaber: Andreas Stihl AG & Co. KG, 71336 Waiblingen (DE)
(72) Erfinder: Raffenberg, Michael, 70736 Fellbach (DE); Roßkamp, Heiko, Dr., 73099 Adelberg (DE); Pfeifer, Markus, 71334 Waiblingen (DE); Hettmann, Heinz, 73614 Schorndorf (DE); Zeller, Markus, 73614 Schorndorf (DE); Langhans, Klaus, 71364 Winnenden (DE); Stark, Thomas, 71336 Waiblingen (DE); Hansen, Sebastian, 74354 Besigheim (DE); Wiedmann, Hans-Georg, 71522 Backnang (DE); Müller, Matthias, 73630 Remshalden (DE)
(74) Vertreter: Wasmuth, Rolf

(56) Entgegenhaltungen:
- DE-A1- 1 782 915
- GB-A- 609 516
- US-A- 4 949 906
- US-B1- 6 409 097

## Beschreibung

Die Erfindung betrifft ein tragbares Sprühgerät mit den Merkmalen nach dem Oberbegriff des Anspruchs 1.

DE 1782915 offenbart ein solches Sprühgerät.

Gattungsgemäße tragbare Sprühgeräte werden im Obst-, Wein- und Gemüseanbau zum Ausbringen von Pflanzenschutzmitteln eingesetzt. Im Vorratsbehälter des Sprühgerätes wird ein eingefülltes Pflanzenschutzmittel bereitgestellt. Die Gebläseeinheit erzeugt einen Gebläseluftstrom, der das Mittel austrägt und den zu behandelnden Pflanzen zuführt.

Je nach Anwendungsfall kann es erforderlich sein, ein flüssiges Sprühmittel oder ein feststofförmiges Stäubemittel auszubringen. Um beide Erfordernisse mit dem gleichen Grundgerät erfüllen zu können, sind Anpaßarbeiten erforderlich. Im Sprühbetrieb ist ein flüssiges Sprühmittel im Vorratsbehälter bevorratet. Dieses wird über einen Flüssigkeitskanal dem Vorratsbehälter entnommen und beispielsweise mittels einer Druckpumpe in den Gebläseluftstrom eingebracht. In Verbindung mit der Druckpumpe umfaßt der Flüssigkeitskanal dabei eine Vorlaufleitung und eine Rücklaufleitung, die mit entsprechenden Mündungen strömungsleitend mit dem Innenraum des Vorratsbehälters in Verbindung stehen. Diese Anordnung ist auf die Förderung von flüssigen Sprühmitteln ausgelegt.

Im Stäubebetrieb werden pulverförmige oder granulatförmige Stäubemittel ausgebracht, zu deren Förderung der Flüssigkeitskanal und die Druckpumpe nicht geeignet ist. Vielmehr ist hierzu eine Dosiervorrichtung einzusetzen, die das Stäubemittel aus dem Innenraum des Vorratsbehälters entnimmt. Das Stäubemittel wird über einen an die Materialeigenschaften des Pulvers bzw. des Granulats angepaßten Feststoffkanal in den Blasluftstrom geleitet.

Sofern das gleiche Grundgerät für den wahlweisen Betrieb mit flüssigen Sprühmitteln und feststofförmigen Stäubemitteln eingesetzt werden soll, müssen einzelne, speziell auf die auszubringenden Flüssigkeiten oder Feststoffe angepaßte Baugruppen ausgetauscht werden. Aufwendige Umbaumaßnahmen sind erforderlich. Die jeweils unbenutzten Baugruppen müssen separat aufbewahrt werden und können verloren gehen.

Der Erfindung liegt die Aufgabe zugrunde, ein gattungsgemäßes Sprühgerät derart weiterzubilden, daß eine Umrüstung zwischen Sprühbetrieb und Stäubebetrieb vereinfacht ist.

Die Aufgabe wird durch ein tragbares Sprühgerät mit den Merkmalen des Anspruchs 1 gelöst.

Es wird ein Sprühgerät mit einem lösbar mit dem Vorratsbehälter verbundenen Adapter vorgeschlagen, der mindestens einen Kanalabschnitt eines Flüssigkeitskanals für das flüssige Sprühmittel sowie einen Kanalabschnitt eines Feststoffkanals für das feststofförmige Stäubemittel aufweist. Der Flüssigkeitskanal und der Feststoffkanal münden in den Gebläseluftstrom. Seitens des Benutzers sind insbesondere zwei verschiedene Einbaulagen des Vorratsbehälters und des Adapters relativ zueinander bzw. relativ zur Gebläseeinheit frei wählbar. In einer der gewählten Einbaulagen steht der Flüssigkeitskanal über dessen Kanalabschnitt und in einer anderen Einbaulage der Feststoffkanal über dessen Kanalabschnitt mit einem Innenraum des Vorratsbehälters in Verbindung.

Die Umbaumaßnahmen des Sprühgerätes zwischen beiden Betriebsarten beschränken sich auf das Lösen des Vorratsbehälters und/oder des Adapters. Durch Veränderung der Einbaulage des Behälters und/oder des Adapters ist nach der anschließend erfolgten Montage die Anpassung an die gewählte Betriebsart abgeschlossen. Es müssen keine verschiedenen, auszutauschenden Teile oder Baugruppen mitgeführt bzw. vorrätig gehalten werden. Alle erforderlichen Teile sind immer am Sprühgerät vorhanden. Umbaumaßnahmen können am Einsatzort mit wenigen Handgriffen erfolgen.

In bevorzugter Weiterbildung ist im Flüssigkeitskanal eine Druckpumpe angeordnet, wobei der Flüssigkeitskanal eine Vorlaufleitung und eine Rücklaufleitung für die Druckpumpe umfaßt. Der Adapter weist insgesamt zwei Kanalabschnitte des Flüssigkeitskanals auf, die durch einen Vorlaufabschnitt der Vorlaufleitung und einen Rücklaufabschnitt der Rücklaufleitung gebildet sind. Durch Veränderung der Einbaulage des Adapters und/oder des Vorratsbehälters können gleich beide Leitungen wahlweise in Betrieb genommen oder außer Betrieb gesetzt werden.

Bevorzugt ist in derjenigen Einbaulage, in der der Flüssigkeitskanal mit dem Innenraum in Verbindung steht, der Kanalabschnitt des Feststoffkanals verschlossen, während in der Einbaulage, in der der Feststoffkanal mit dem Innenraum in Verbindung steht, der Kanalabschnitt des Flüssigkeitskanals verschlossen ist. Es ist hierdurch sichergestellt, daß kein Stäubemittel in den Flüssigkeitskanal und kein Sprühmittel in den Feststoffkanal gelangt. Ein Wechsel zwischen den beiden Betriebsarten führt nicht zu einer Vermischung von in den jeweiligen Kanälen verbleibenden Resten. Eine Kontamination oder ein Verkleben ist vermieden.

In zweckmäßiger Weiterbildung weist der Adapter einen Kanalabschnitt eines Druckluftkanals auf, der von einem Überdruckbereich des Gebläses mit Luftdruck gespeist ist, wobei der Druckluftkanal über dessen Kanalabschnitt zumindest in der für den Sprühbetrieb vorgesehenen relativen Einbaulage und insbesondere in beiden relativen Einbaulagen des Adapters und des Vorratsbehälters zueinander mit dem Innenraum druckübertragend verbunden ist. Der Druckluftkanal ist durch den Adapter hindurch in den Innenraum des Vorratsbehälters geführt. Dieser wird im verschlossenen Zustand unter Innendruck gesetzt, was den Austrag des flüssigen Sprühmittels oder des feststofförmigen Stäubemittels erleichtert. Beim Lösen des Vorratsbehälters bzw. des Adapters ist neben dem Flüssigkeitskanal und dem Feststoffkanal auch der Druckluftkanal unterbrochen. Es besteht keine Verbindung mehr zwischen der Gebläseeinheit und dem Vorratsbehälter. Der Adapter und der Vorratsbehälter können frei gehandhabt werden. Bei der Verbindung von Adapter und Vorratsbehälter wird die Druckübertragung selbsttätig hergestellt.

In einer bevorzugten Ausführungsform weist der Vorratsbehälter einen Boden mit einer Mittellinie auf, wobei eine dem Kanalabschnitt des Flüssigkeitskanals zugeordnete Flüssigkeitsentnahmeöffnung und eine dem Kanalabschnitt des Feststoffkanals zugeordnete Feststoffentnahmeöffnung des Bodens auf der gleichen Seite der Mittellinie angeordnet sind. Dabei weist der Adapter eine Mittellinie auf, wobei der Kanalabschnitt des Flüssigkeitskanals und der Kanalabschnitt des Feststoffkanals auf verschiedenen Seiten der Mittellinie des Adapters angeordnet sind. Der Boden und der Adapter liegen im montierten Zustand derart aneinander, daß je nach Einbaulage entweder der Flüssigkeitskanal und die Flüssigkeitsöffnungen oder aber der Feststoffkanal und die Feststofföffnung in Überdeckung zueinander stehen. Gleichzeitig liegen die jeweils anderen, unbenutzten Öffnungen und zugeordneten Kanalabschnitte auf verschiedenen Seiten der Mittellinien, wodurch ein strömungsleitender Durchgang unterbunden ist. Diese Anordnung erlaubt nach Belieben wahlweise durch eine 180°-Drehung des Adapters oder des Vorratsbehälters einen einfachen Umbau zwischen den beiden Betriebsarten. Fehlmontagen sind vermieden.

Bevorzugt sind die Flüssigkeitsöffnung und die Feststoffentnahmeöffnung gemeinsam durch eine einzelne Öffnung im Boden des Vorratsbehälters gebildet. Der Boden des Vorratsbehälters ist einfach im Aufbau und unempfindlich gegen Maßtoleranzen.

Eine exakte Ausrichtung der vergleichsweise großen einzelnen Öffnung relativ zum Kanalabschnitt des Flüssigkeitskanals oder zum Kanalabschnitt des Feststoffkanals im Adapter ist nicht erforderlich.

Je nach Anwendungsfall kann es zweckmäßig sein, eine feste, unveränderliche Einbaulage des Vorratsbehälters bei zwei verschiedenen Einbaulagen des Adapters oder eine feste, unveränderliche Einbaulage des Adapters bei zwei verschiedenen Einbaulagen des Vorratsbehälters vorzusehen. Die veränderliche Einbaulage des Vorratsbehälters führt dazu, daß der Adapter beim Umrüsten nicht herausgenommen bzw. demontiert werden muß. Insbesondere ist die Möglichkeit gegeben, diesen fest an der Gebläseeinheit zu montieren. Es muß lediglich der Vorratsbehälter gelöst, gedreht und wieder befestigt werden. Zweckmäßig ist der Adapter fest mit der Gebläseeinheit und der Vorratsbehälter lösbar direkt mit dem Adapter verbunden. Die Anzahl der Einzelteile ist minimiert. Beim Lösen und Drehen des Vorratsbehälters existieren keine losen Teile, die verloren gehen könnten.

Umgekehrt ist eine leichte Umrüstung durch Veränderung der Einbaulage des Adapters möglich. Dies erlaubt insbesondere eine dauerhafte Verbindung des Vorratsbehälters mit dem Rückentragegestell. Hierzu kann beispielsweise eine Befestigung mittels Antivibrationselementen vorgesehen sein, die beim Umrüsten nicht gelöst werden müssen.

Hierzu ist vorteilhaft der Adapter als separate Adapterplatte ausgeführt, deren beiden verschiedenen Einbaulagen durch Drehung der Adapterplatte um eine ihrer Mittellinien oder um ihre Hochachse gebildet sind. Bevorzugt ist der Vorratsbehälter unter Zwischenlage der Adapterplatte lösbar direkt mit der Gebläseeinheit verbunden. Die Umrüstung zwischen Sprüh- und Stäubebetrieb kann mit wenigen Handgriffen erfolgen. Im montierten Zustand ist die zwischenliegende Adapterplatte sicher fixiert. Vorratsbehälter und Gebläseeinheit bilden eine mechanisch im wesentlichen starre Einheit, die insbesondere durch Schnellverschlüsse manuell leicht lösbar ist. Im fest verbundenen Zustand ist gleichzeitig auch der Adapter infolge seiner zwischenliegenden Anordnung fixiert. Die im wesentlichen starre Baueinheit kann in definierter Weise schwingungsentkoppelt am Rückentragegestell aufgehängt werden. Nach dem Lösen der Verbindung zwischen dem Vorratsbehälter und der Gebläseeinheit ist auch der Adapter gleich mit gelöst. Auf separate Befestigungsmittel kann verzichtet werden. Der Umbauvorgang ist vereinfacht.

In einer vorteilhaften Weiterbildung ist bezogen auf eine gewöhnliche Arbeitshaltung des Sprühgerätes eine Hochrichtung und eine durch die Drehebene der als Radialgebläses ausgebildeten Gebläseeinheit definierte Seitenrichtung vorgegeben, wobei der Adapter und insbesondere auch der Boden des Vorratsbehälters bezogen auf die Hochrichtung und die Seitenrichtung seitlich und unterhalb eines höchsten Punktes der Gebläseeinheit angeordnet sind. Der Vorratsbehälter kann dadurch nahezu direkt oberhalb der Gebläseeinheit angeordnet werden, ohne daß in der Hochrichtung ein zwischenliegender Bauraum für den Adapter und den Boden bereitgestellt werden muß. Das Sprühgerät weist einen insgesamt niedrigeren Schwerpunkt auf, wodurch die Handhabbarkeit vereinfacht wird.

Zweckmäßig ist ein Dosierer für das Stäubemittel vorgesehen ist, der als Drehschieber ausgeführt ist. Der Drehschieber weist eine reproduzierbar und gleichmäßig einstellbare Steuercharakteristik für die Steuerung des Stäubemittel-Massenstromes auf.

Bevorzugt ist stromab eines Dosierers für das Stäubemittel ein Tragluftstrom in den Feststoffkanal geführt. Es kann ein Venturi-Effekt entstehen, bei dem der Tragluftstrom das Stäubemittel aus dem Vorratsbehälter ansaugt und mitreißt. Die derartige Förderung des Stäubemittels ist einfach und wirkungsvoll. Auf zusätzliche Fördereinrichtungen, Pumpen, Gebläse etc. kann verzichtet werden.

Ausführungsbeispiele der Erfindung sind im folgenden anhand der Zeichnung näher beschrieben. Es zeigen:
- Fig. 1: in einer Seitenansicht ein tragbares Sprühgerät mit einem Vorratsbehälter und einer Gebläseeinheit, welches zum wahlweisen Ausbringen von flüssigen Sprühmitteln oder feststofförmigen Stäubemitteln vorgesehen ist, wobei die Anordnung eines Flüssigkeitskanals mit einer Druckpumpe schematisch dargestellt ist;
- Fig. 2: eine rückwärtige Ansicht des Sprühgerätes nach Fig. 1 mit weiteren Einzelheiten der Anordnung eines Feststoffkanals zum Ausbringen von feststofförmigen Stäubemitteln, wobei zwischen dem Vorratsbehälter und der Gebläseeinheit ein angedeuteter Adapter angeordnet ist;
- Fig. 3: eine schematische Draufsicht des Bodens vom Vorratsbehälter nach den Figuren 1 und 2 mit Flüssigkeitsöffnungen und einer gegenüberliegenden Feststoffentnahmeöffnung;
- Fig. 4: eine schematische Draufsicht des Adapters nach Fig. 2 mit einem Vorlaufkanalabschnitt, einem Rücklaufkanalabschnitt und einem auf der gleichen Seite angeordneten Abschnitt des Feststoffkanals;
- Fig. 5: eine Draufsicht des über dem Adapter nach Fig. 4 liegenden Bodens nach Fig. 3 in einer Ausgangsposition, bei der die Flüssigkeitskanäle in Überdeckung mit den Flüssigkeitsöffnungen stehen;
- Fig. 6: die Anordnung nach Fig. 5 mit um 180° gegenüber der Anordnung nach Fig. 5 gedrehtem Adapter, wobei der Feststoffkanal und die Feststoffentnahmeöffnung in Überdeckung zueinander stehen;
- Fig. 7: die Anordnung nach Fig. 5 mit gegenüber der in Fig. 5 gezeigten Ausgangslage um 180° gedrehtem Boden, bei dem der Feststoffkanal und die Feststoffentnahmeöffnung in Überdeckung zueinander stehen;

- Fig. 8: eine schematische Querschnittsdarstellung der Anordnung nach Fig. 2 im Bereich des Adapters, bei dem der Adapter als Adapterplatte mit integrierten Flüssigkeits- und Feststoffkanälen ausgebildet und in einer Position für den Feststoffbetrieb eingebaut ist;
- Fig. 9: die Anordnung nach Fig. 8 mit umgedreht eingebauter Adapterplatte im Betrieb für den Flüssigkeitsaustrag;
- Fig. 10: eine Rückansicht eines weiteren Ausführungsbeispiels im Bereich des Vorratsbehälters, der zur Montage in zwei verschiedenen, gegeneinander um 180° verdrehten Positionen an einem gebläsefesten Adapter vorgesehen ist;
- Fig. 11: eine perspektivische Explosionsdarstellung der Anordnung nach Fig. 10 mit Einzelheiten des Adapters und des Behälterbodens;
- Fig. 12: eine Querschnittsdarstellung der Anordnung nach den Fig. 10 und 11 im Bereich des Adapters und des Behälterbodens in der für den Stäubebetrieb vorgesehenen Montageposition mit Einzelheiten eines Dosierers für das Stäubemittel;
- Fig. 13: eine vergrößerte Detailansicht des Dosierers nach Fig. 12;
- Fig. 14: eine Rückansicht eines erfindungsgemäß ausgeführten Sprühgerätes mit einem seitlich und nach unten versetzten Adapter.

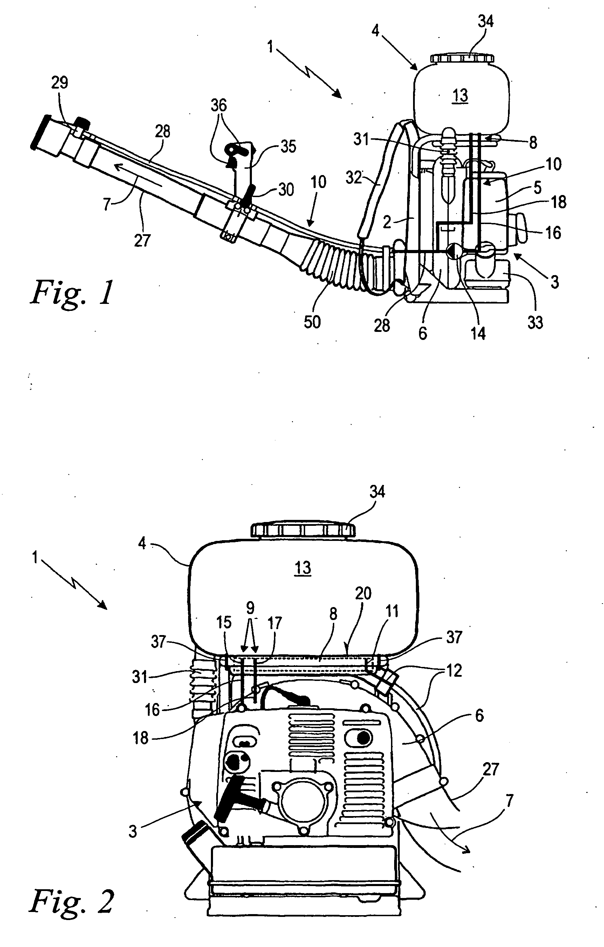

Fig. 1 zeigt in einer Seitenansicht ein tragbares Sprühgerät 1 mit einem Rückentragegestell 2, an dem eine Gebläseeinheit 3 und ein Vorratsbehälter 4 für einen auszubringenden Stoff befestigt sind. Der auszubringende Stoff kann wahlweise ein flüssiges Sprühmittel oder ein feststofförmiges Stäubemittel sein, die im Betrieb in einem Innenraum 13 des Vorratsbehälters 4 bevorratet sind.

Die Gebläseeinheit 3 umfaßt einen Antriebsmotor 5, der im gezeigten Ausführungsbeispiel ein Verbrennungsmotor ist, aber auch ein Elektromotor oder dgl. sein kann. Zur Versorgung des Antriebsmotors 5 mit Kraftstoff ist unterhalb dessen ein Kraftstofftank 33 am Rückentragegestell 2 gehalten. Des weiteren umfaßt die Gebläseeinheit 3 ein Gebläse 6, welches im gezeigten Ausführungsbeispiel ein Radialgebläse ist. Es kann auch ein Axialgebläse oder dgl. vorgesehen sein. Das Gebläse 6 ist vom Antriebsmotor 5 angetrieben und erzeugt dabei einen Gebläseluftstrom 7, der durch ein Blasrohr 27 geführt und den zu bearbeitenden Pflanzen oder dgl. zugeführt wird. Das Blasrohr 27 ist über einen Faltenbalg 50 strömungsleitend mit dem Gebläse 6 verbunden.

Im Betrieb wird das Sprühgerät 1 mit dem Rückentragegestell 2 und daran befestigten Tragegurten 32 auf dem Rücken einer nicht dargestellten Bedienperson getragen. Diese greift mit der Hand einen Handgriff 35 am Blasrohr 27 und kann mit dem Handgriff 35 unter elastischer Verformung des Faltenbalgs 50 das Blasrohr 27 in seiner Richtung steuern. Am Handgriff 35 sind Bedienelemente 36 zur Steuerung der Motorleistung des Antriebsmotors 5 angeordnet. Entlang der Außenkontur des Blasrohres 27 verläuft parallel dazu eine Druckleitung 28, in der am Fußpunkt des Handgriffs 35 ein Steuerventil 30 angeordnet ist. Das Steuerventil 30 kann ebenso wie die Bedienelemente 36 von der den Handgriff 35 umschließenden Hand der Bedienperson betätigt werden.

Das gezeigte tragbare Sprühgerät 1 ist gleichermaßen zum Ausbringen von flüssigen Sprühmitteln oder feststofförmigen Stäubemitteln vorgesehen. Der Austrag dieser Mittel aus dem Innenraum 13 des Vorratsbehälters 4 kann durch die Saugwirkung des Gebläseluftstromes 7, durch Gewichtskraft, durch einen Innendruck im Innenraum 13 des Vorratsbehälters 4, durch eine Druckpumpe 14 oder andere geeignete Fördermittel sowie auch durch eine Kombination der vorgenannten Maßnahmen vorgenommen werden. Für die Erzeugung des gegenüber dem Umgebungsdruck vergrößerten Innendrucks im Innenraum 13 des Vorratsbehälters 4 weist dieser an seiner Oberseite einen Deckel 34 auf, mit dem der Vorratsbehälter 4 druckdicht verschlossen ist. Es ist ein Druckluftkanal 31 vorgesehen, der von einem Überdruckbereich des Gebläses 6 abzweigt und in den Innenraum 13 des Vorratsbehälters 4 mündet. Im Betrieb erzeugt das Gebläse 6 neben dem Gebläseluftstrom 7 auch gegenüber dem Umgebungsdruck einen Überdruck, der mittels des Druckluftkanals 31 in den Innenraum 13 übertragen wird und diesen unter Überdruck setzt.

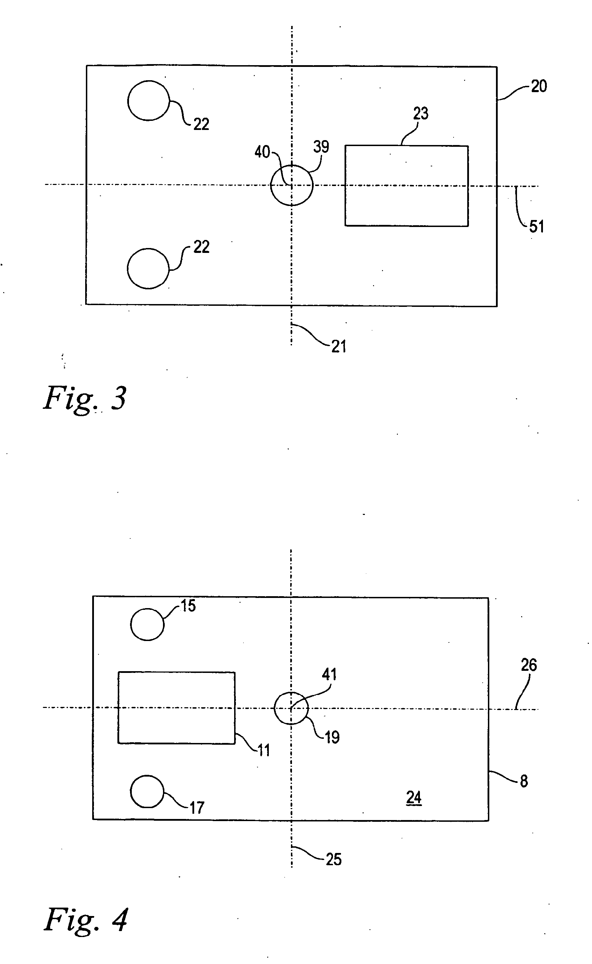

An der Unterseite des Vorratsbehälters 4 ist zwischen diesem und der Gebläseeinheit 3 ein Adapter 8 angeordnet. Zwischen dem Adapter 8 und dem Vorratsbehälter 4 besteht eine lösbare, im Betrieb jedoch feste Verbindung. Für das Ausbringen von flüssigen Sprühmitteln ist ein Flüssigkeitskanal 10 vorgesehen, der in strömungsleitender Verbindung zum Innenraum 13 des Vorratsbehälters 4 steht, und der das flüssige Sprühmittel aus dem Vorratsbehälter 4 dem Gebläseluftstrom 7 zuführt. Im gezeigten Ausführungsbeispiel umfaßt der Flüssigkeitskanal 10 eine Vorlaufleitung 16, die Druckleitung 28 und eine Rücklaufleitung 18. Die Vorlaufleitung 16 führt vom Vorratsbehälter 4 zu der Druckpumpe 14, die das flüssige Sprühmittel aus dem Innenraum 13 fördert und unter Druck durch die Druckleitung 18 und eine Düse 29 am freien Ende des Blasrohrs 27 in den Gebläseluftstrom 7 fördert. Die Fördermenge des flüssigen Sprühmittels durch die Druckleitung 28 ist mittels des Steuerventils 30 einstellbar. Die Förderleistung der Druckpumpe 14 wird durch den Innendruck im Vorratsbehälter 4 und die Sogwirkung an der Düse 29 unterstützt. Von der Druckleitung 28 zweigt die Rücklaufleitung 18 ab. Durch diese wird überschüssig gefördertes Sprühmittel zurück in den Innenraum 13 geleitet. Es kann auch zweckmäßig sein, auf die Rücklaufleitung 18 zu verzichten. Die Vorlaufleitung 16 und die Rücklaufleitung 18 sind beide durch den Adapter 8 hindurchgeführt, wobei die Funktion des Adapters 8 weiter unten näher beschrieben ist. Der Druckluftkanal 31 ist beispielhaft außenseitig um den Adapter 8 herumgeführt, kann jedoch auch entsprechend der Darstellung nach den Figuren 3 bis 7 durch den Adapter 8 hindurchgeführt sein.

Fig. 2 zeigt eine Rückansicht des Sprühgerätes 1 nach Fig. 1, wobei hier der besseren Übersichtlichkeit halber nur kurze Abschnitte der Vorlaufleitung 16 und der Rücklaufleitung 18 schematisch angedeutet sind. Des weiteren ist für den alternativen Betrieb mit einem feststofförmigen Stäubemittel ein Feststoffkanal 12 vorgesehen, der mit dem Innenraum 13 des Vorratsbehälters 4 in Verbindung steht. Auch der Feststoffkanal 12 steht ebenso wie der Flüssigkeitskanal 10 in Verbindung mit dem Gebläseluftstrom 7. Über einen nicht dargestellten Dosierer unter zusätzlicher Einwirkung des Innendrucks im Innenraum 13, der Gewichtskraft und der Sogwirkung des Gebläseluftstroms 7 kann das feststofförmige Stäubemittel aus dem Vorratsbehälter 4 heraus durch den Feststoffkanal 12 in das Blasrohr 27 eingeleitet werden.

Auf der Oberseite des Gebläses 6 ist dieses mit einem Halteflansch 38 versehen, an dem der Vorratsbehälter 4 mittels zweier angedeuteter Schnellverschlüsse 37 befestigt ist. Im Betrieb ist eine feste, mechanisch im wesentlichen starre Verbindung zwischen dem Vorratsbehälter 4 und der Gebläseeinheit 3 gebildet, die jedoch mittels der Schnellverschlüsse 37 lösbar ist. Im Innenraum des wannenförmigen Halteflansches 38 ist der Adapter 8 angeordnet, durch den die Vorlaufleitung 16, die Rücklaufleitung 18 und der Feststoffkanal 12 hindurchgeführt ist.

Durch den Adapter 8 verlaufen zwei Kanalabschnitte 9 des Flüssigkeitskanals 10 (Fig. 1) sowie ein Kanalabschnitt 11 des Feststoffkanals 12. Die beiden Kanalabschnitte 9 des Flüssigkeitskanals 10 sind durch einen Vorlaufabschnitt 15 der Vorlaufleitung 16 und einen Rücklaufabschnitt 17 der Rücklaufleitung 18 gebildet. Bei einer Ausführung mit fehlender Rücklaufleitung 18 ist nur der Vorlaufabschnitt 15 als einziger Kanalabschnitt 9 des Flüssigkeitskanals 10 vorgesehen.

Der besseren Übersichtlichkeit halber sind hier der Kanalabschnitt 11 sowie der Vorlaufabschnitt 15 und der Rücklaufabschnitt 17 in einer Position gezeigt, bei der der Feststoffkanal 12 und die Flüssigkeitskanäle 10 strömungsleitend mit dem Innenraum 13 des Vorratsbehälters 4 in Verbindung stehen. Tatsächlich ist jedoch nach der Erfindung keine gleichzeitige, sondern nur alternativ eine strömungsleitende Verbindung vorgesehen, wie dies aus den Figuren 3 bis 9 und der zugehörigen Beschreibung ersichtlich wird.

Nach dem Lösen der Schnellverschlüsse 37 kann wahlweise der Adapter 8 und/oder der Vorratsbehälter 4 in der Einbauposition relativ zueinander bzw. relativ zur Gebläseeinheit 3 verändert werden. Es wird also entweder die Einbaulage des Adapters 8 verändert, während die Einbaulage vom Vorratsbehälter 4 und der Gebläseeinheit 3 gleich bleibt, oder die Einbauposition des Vorratsbehälters 4 samt seines Bodens 20 wird verändert, während die Position des Adapters 8 und der Gebläseeinheit 3 gleich bleibt. Es kann auch zweckmäßig sein, die Einbauposition des Vorratsbehälters 4 gemeinsam mit dem Adapter 8 gleichsinnig relativ zur Gebläseeinheit 3 zu verändern. Ein Boden 20 des Vorratsbehälters 4 und der Adapter 8 sind in unten näher beschriebener Weise derart aufeinander abgestimmt, daß abhängig von der relativen Einbaulage wahlweise entweder der Feststoffkanal 12 über dessen Kanalabschnitt 11 oder aber die Vorlaufleitung 16 über deren Vorlaufabschnitt 15 und die Rücklaufleitung 18 über deren Rücklaufabschnitt 17 eine strömungsleitende Verbindung zum Innenraum 13 haben.

In allen verschiedenen Einbaulagen ist der Adapter 8 zwischen dem Vorratsbehälter 4 und der Gebläseeinheit 3 mittels der Schnellverschlüsse 37 eingeklemmt. Der Druckluftkanal 31 ist seitlich außen um den Halteflansch 38 und den Adapter 8 herumgeführt und steht dauerhaft in strömungsleitender Verbindung zum Innenraum 13. Entsprechend der Darstellung nach den Figuren 3 bis 7 kann es jedoch auch zweckmäßig sein, den Druckluftkanal 31 durch den Adapter 8 hindurchzuführen.

Die prinzipielle Funktion des Zusammenspiels vom Adapter 8 mit dem Vorratsbehälter 4 ist schematisch in den Figuren 3 bis 7 dargestellt. Fig. 3 zeigt eine schematische Draufsicht des Bodens 20 vom Vorratsbehälter 4 nach den Figuren 1 und 2. Der Boden 20 ist im wesentlichen spiegelsymmetrisch zu zwei senkrecht zueinander stehenden Mittellinien 21, 51 aufgebaut und umfaßt eine Feststoffentnahmeöffnung 23 sowie zwei Flüssigkeitsöffnungen 22. Die beiden Flüssigkeitsöffnungen 22 sind spiegelsymmetrisch zur Mittellinie 51 auf der gleichen Seite der Mittellinie 21 angeordnet, während die Feststoffentnahmeöffnung 23 mittig auf der Mittellinie 51, jedoch bezogen auf die Mittellinie 21 den beiden Flüssigkeitsöffnungen 22 gegenüberliegend angeordnet ist. Im Schnittpunkt der beiden Mittellinien 21, 51 verläuft eine Hochachse 40, die eine Mittelachse einer Drucköffnung 39 bildet. Die Drucköffnung 39 ist für den Fall vorgesehen, daß abweichend von der Darstellung nach den Figuren 1 und 2 der Druckluftkanal 31 durch den Adapter 8 hindurchgeführt ist. Es kann auch zweckmäßig sein, die Drucköffnung 39 außermittig, also neben der Hochachse 40 anzuordnen. Der in den Figuren 1 und 2 gezeigte Vorratsbehälter 4 kann in zwei verschiedenen Einbaulagen um 180° gegeneinander um die Hochachse 40 verdreht eingebaut werden.

Fig. 4 zeigt eine schematische Draufsicht des Adapters 8 nach den Figuren 1 und 2, der im gezeigten Ausführungsbeispiel als Adapterplatte 24 mit zwei senkrecht zueinander verlaufenden Mittellinien 25, 26 ausgebildet ist. Die beiden Mittellinien 25, 26 schneiden sich in einer senkrecht dazu stehenden Hochachse 41, die auch eine Mittellinie für einen dort angeordneten Kanalabschnitt 19 des Druckluftkanals 31 (Fig. 2) bildet. Der Kanalabschnitt 19 in der Adapterplatte 24 ist ebenso wie die Drucköffnung 39 im Boden 20 nach Fig. 3 für den Fall vorgesehen, daß der Druckluftkanal 31 abweichend von der Darstellung nach den Figuren 1 und 2 durch die Adapterplatte 24 hindurchgeführt ist. Es kann auch zweckmäßig sein, den Kanalabschnitt 19 außermittig, also neben der Hochachse 41 anzuordnen.

Die gezeigte Adapterplatte 24 ist spiegelsymmetrisch zur Mittellinie 26 aufgebaut, wobei der Kanalabschnitt 11 des Feststoffkanals 12 (Fig. 2) mittig auf der Mittellinie 26 liegt. Der Vorlaufabschnitt 15 und der Rücklaufabschnitt 17 sind bezogen auf die Mittellinie 26 spiegelsymmetrisch zueinander angeordnet und liegen gemeinsam mit dem Kanalabschnitt 11 auf der gleichen Seite der Mittellinie 25. Die Adapterplatte 24 ist für seitens des Benutzers zu wählende zwei verschiedene Einbaupositionen vorgesehen, wobei ausgehend von der hier gezeigten Einbauposition die zweite Einbauposition entweder durch eine 180°-Drehung um die Hochachse 41 oder um eine 180°-Drehung um die Mittellinie 25 erreicht wird.

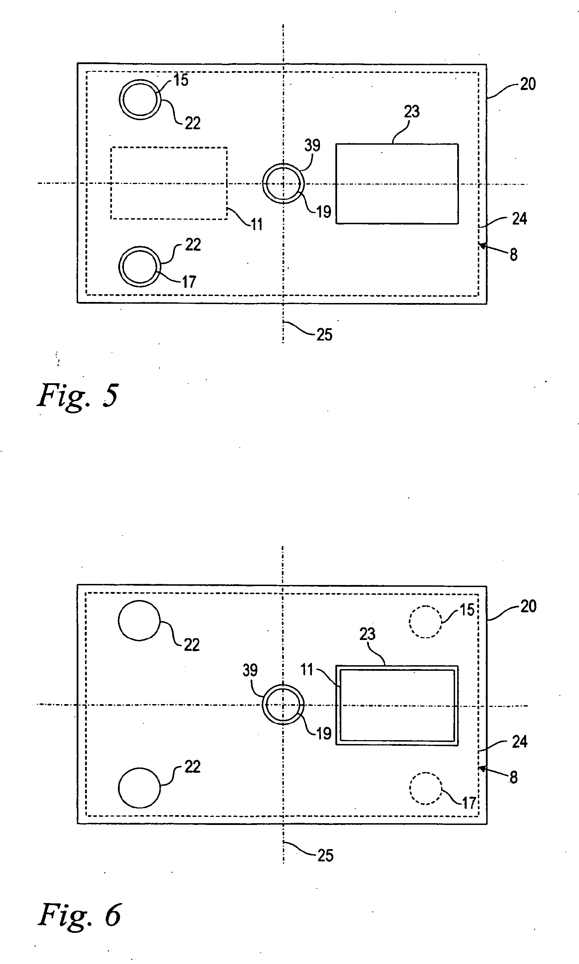

Entsprechend der Darstellung nach Fig. 5 ist zu erkennen, daß im montierten Zustand der Boden 20 nach Fig. 3 derart über der Adapterplatte 24 nach Fig. 4 liegt, daß in der gezeigten Draufsicht die Mittellinien 21, 25 sowie die Mittellinien 51, 26 (Fig. 3, 4) jeweils deckungsgleich sind. Dabei liegt die Drucköffnung 39 in Überdeckung mit dem Kanalabschnitt 19 und stellt eine strömungsleitende Verbindung zwischen dem Druckluftkanal 31 (Fig. 2) und dem Innenraum 13 des Vorratsbehälters 4 her. Gleichzeitig liegen auch der Vorlaufabschnitt 15 und der Rücklaufabschnitt 17 in Überdeckung mit den zugeordneten Flüssigkeitsöffnungen 22, wobei entsprechend der Darstellung nach den Figuren 1 und 2 eine strömungsleitende Verbindung zwischen der Vorlaufleitung 16 und der Rücklaufleitung 18 mit dem Innenraum 13 des Vorratsbehälters 4 hergestellt ist.

In der hier gezeigten Ausgangslage für den Betrieb mit flüssigem Sprühmittel liegen die Feststoffentnahmeöffnung 23 und der Kanalabschnitt 11 auf verschiedenen Seiten der Mittellinie 25. Die Feststoffentnahmeöffnung 23 ist dabei durch die Adapterplatte 24 strömungsdicht verschlossen, während der Kanalabschnitt 11 des Feststoffkanals 12 (Fig. 2) in der Adapterplatte 24 durch den Boden 20 strömungsdicht verschlossen ist.

Ausgehend von der in Fig. 5 gezeigten Ausgangslage für den Sprühbetrieb kann ein Umbau für den Stäubebetrieb in zweierlei Arten erfolgen. Entsprechend der Darstellung nach Fig. 6 behält der Boden 20 des Vorratsbehälters 4 (Fig. 2) seine Lage bei, während die Adapterplatte 24 gedreht ist. Nach einer 180°-Drehung um die Mittelachse 25 oder die Hochachse 41 (Fig. 4) liegt der Kanalabschnitt 11 des Feststoffkanals 12 (Fig. 2) in strömungsleitender Überdeckung mit der Feststoffentnahmeöffnung 23, wodurch eine Verbindung des Feststoffkanals 12 mit dem Innenraum 13 (Fig. 2) hergestellt ist. Die Vorlaufabschnitt 15 und der Rücklaufabschnitt 17 liegen bezogen auf die Mittellinie 25 den Flüssigkeitsöffnungen 22 des Bodens 20 gegenüber und sind vom Boden 20 strömungs- und druckdicht verschlossen. Gleichzeitig sind die Flüssigkeitsöffnungen 22 im Boden 20 strömungs- und druckdicht von der Adapterplatte 24 verschlossen. Auch bei dieser relativen Einbaulage liegen der Kanalabschnitt 19 des Druckluftkanals 31 (Fig. 2) und die Drucköffnung 39 weiterhin in Überdeckung zueinander. Das Gerät ist bereit für den Stäubebetrieb. Ein Rückbau in die Bereitschaft für den Sprühbetrieb erfolgt durch Rückdrehung der Adapterplatte 24, wodurch die Relativposition entsprechend der Darstellung nach Fig. 5 wiederhergestellt ist.

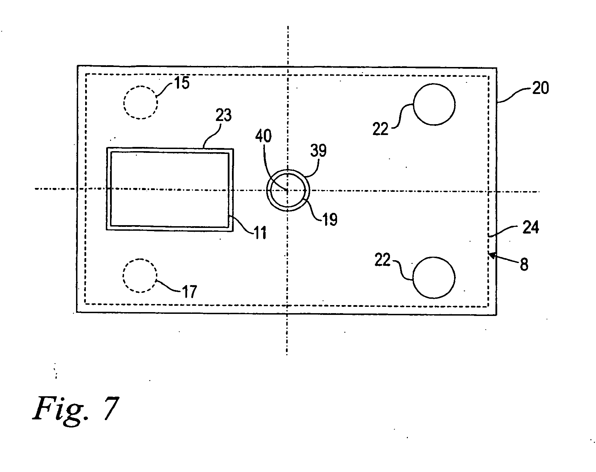

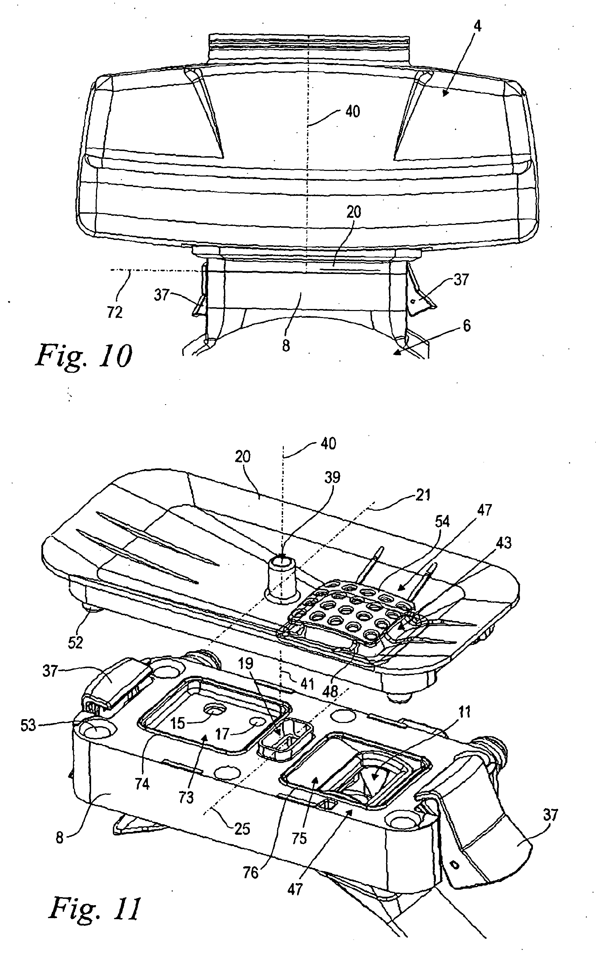

Eine weitere Option zur Herstellung der Konfiguration für den Stäubebetrieb - ausgehend von der Konfiguration für den Sprühbetrieb nach Fig. 5 - besteht darin, die Einbaulage der Adapterplatte 24 entsprechend der Darstellung nach Fig. 7 unverändert zu belassen und den Vorratsbehälter 4 (Fig. 2) mit seinem fest verbundenen Boden 20 um 180° um die Hochachse 40 zu drehen. Auch kann es zweckmäßig sein, den Boden 20 als Einzelteil zu drehen, während die übrigen Komponenten in ihrer relativen Lage unverändert bleiben. Es entsteht die gleiche Konfiguration wie bei der Darstellung nach Fig. 6 mit gleichen Merkmalen und Funktionseigenschaften, die sich lediglich in einer um 180° gedrehten Einbaulage unterscheidet. Die in Fig. 7 gezeigte Variante erlaubt jedoch, den Adapter 8 fest an der Gebläseeinheit 3 (Fig. 2) anzubauen. Einzelheiten eines Ausführungsbeispiels dazu sind weiter unten im Zusammenhang mit den Fig. 10 bis 13 beschrieben.

In allen hier gezeigten verschiedenen relativen Einbaulagen stellt der Kanalabschnitt 19 des Druckluftkanals 31 (Fig. 2) eine druckleitende Verbindung zwischen dem Überdruckbereich des Gebläses 6 und dem Innenraum 13 des Vorratsbehälters 4 (Fig. 2) her. Einerseits kann dadurch ein Druckausgleich im Innenraum 13 des Vorratsbehälters 4 zur Kompensation von entnommenem Sprüh- oder Stäubemittel vorgenommen werden. Andererseits kann insbesondere im Sprühbetrieb der im Innenraum 13 des Vorratsbehälters 4 entstehende Überdruck für eine Druckförderung des Sprühmittels genutzt werden. Dabei kann ggf. auf die Anordnung einer Druckpumpe 14 (Fig. 1) verzichtet werden. Es kann zweckmäßig sein, den Kanalabschnitt 19 des Druckluftkanals 31 und die Drucköffnung 39 im Boden 20 des Vorratsbehälters 4 derart außermittig zu den jeweiligen Hochachsen 40, 41 (Fig. 3, 4) anzuordnen, daß sie lediglich in der für den Sprühbetrieb vorgesehenen Relativposition in Überdeckung zueinander liegen. Bei Drehung in die Stäubeposition wird diese Überdeckung aufgehoben. Eine Druckförderung bzw. ein Druckausgleich erfolgt dann nur im Sprühbetrieb.

Unter Beibehaltung des in den Figuren 3 bis 7 gezeigten Prinzips kann es auch zweckmäßig sein, die Flüssigkeitsöffnungen 22 und die Feststoffentnahmeöffnung 23 nach Fig. 3 auf der gleichen Seite der Mittellinie 21 anzuordnen, während gleichzeitig der Kanalabschnitt 11 in der Adapterplatte 24 nach Fig. 4 bezogen auf die Mittellinie 25 gegenüberliegend zum Vorlaufabschnitt 15 und zum Rücklaufabschnitt 17 angeordnet ist.

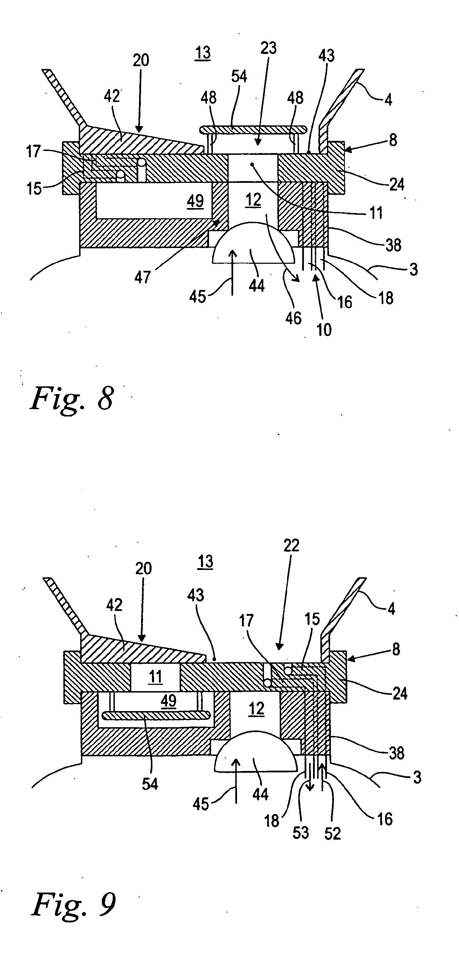

Die Figuren 8 und 9 zeigen noch eine Querschnittsdarstellung des Sprühgerätes 1 nach den Figuren 1 und 2 im Bereich der Verbindungsstelle zwischen dem Vorratsbehälter 4 und der Gebläseeinheit 3 mit einer weiteren Ausführungsform des Adapters 8. Im Halteflansch 38 der Gebläseeinheit 3 ist ein durchgehender Teil des Feststoffkanals 12 eingeformt. Auf seiner Oberseite befindet sich seitlich neben diesem Teil des Feststoffkanals 12 ein geschlossener, lediglich in Richtung des Vorratsbehälters 4 offener Aufnahmeraum 49. Der gezeigte Teil des Feststoffkanals 12 ist auf seiner der Gebläseeinheit 3 zugewandten Unterseite mit einem Halbkugelventil 44 verschlossen, welches durch eine nicht dargestellte Druckfeder in Richtung eines Pfeiles 45 derart vorgespannt ist, daß der gezeigte Teil des Feststoffkanals 12 strömungsdicht verschlossen ist. In der gezeigten Ausführungsform umgreift die Adapterplatte 24 nach Art eines Ringflansches sowohl den Halteflansch 38 als auch den Boden 20 des Vorratsbehälters 4.

Bei der in Fig. 8 gezeigten, für den Stäubebetrieb vorgesehenen Einbaulage ist der Feststoffkanal 12 durch die Adapterplatte 24 hindurchgeführt und steht mittels des darin eingeformten Kanalabschnitts 11 mit dem Innenraum 13 strömungsleitend in Verbindung.

Der Boden 20 des Vorratsbehälters 4 ist mit einer Schrägfläche 42 versehen, die bezogen auf die gezeigte gewöhnliche aufrechte Haltung seitlich schräg nach unten zu einer seitlich versetzten Öffnung 43 im Boden 20 verläuft. Die Öffnung 43 steht in Überdeckung mit dem Kanalabschnitt 11 des Feststoffkanals 12, der bezogen auf die Mittellinie ebenfalls seitlich versetzt ist. Die Öffnung 43 im Boden 20 wirkt hier als Feststoffentnahmeöffnung 23.

Am Adapter 8 ist ein Sieb 54 für das feststofförmige, im Innenraum 13 des Vorratsbehälters 4 bevorratete Stäubemittel vorgesehen. Das Sieb 54 ist mittels Streben 48 am Adapter 8 gehalten und ragt ausgehend vom Adapter 8 durch die Feststoffentnahmeöffnung 23 in den Innenraum 13 des Vorratsbehälters 4 hinein. Das Sieb 54 und das Halbkugelventil 44 sind Teil eines Dosierers 47, welcher zur Dosierung der Austragsmenge des Stäubemittels vorgesehen ist.

Der in den Figuren 1 und 2 gezeigte Druckluftkanal 31 ist hier der besseren Übersichtlichkeit halber nicht gezeigt. Er kann entsprechend der Darstellung nach den Figuren 1 und 2 außenseitig am Adapter 8 vorbeigeführt oder entsprechend der Darstellung nach den Figuren 2 bis 7 durch den Adapter 8 hindurchgeführt sein. Durch ihn wird im Betrieb der Innenraum 13 unter Überdruck gesetzt. Der Überdruck wirkt durch die Feststoffentnahmeöffnung 23 und den Feststoffkanal 12 auf das Halbkugelventil 44 und hebt dieses entgegen dem Pfeil 45 von seinem Dichtsitz ab. Das vom Dosierer 47 dosierte Stäubemittel kann aus dem Innenraum 13 durch den Feststoffkanal 12 am Halbkugelventil 44 vorbei in Richtung eines Pfeiles 46 herausgefördert und entsprechend der Darstellung nach Fig. 2 dem Gebläseluftstrom 7 zugeführt werden.

In der hier gezeigten, für den Stäubebetrieb vorgesehenen Einbaulage der Adapterplatte 24 stehen der Vorlaufabschnitt 15 und der Rücklaufabschnitt 17 nicht in strömungsleitender bzw. druckübertragender Verbindung mit dem Innenraum 13. Vielmehr sind sie auf der dem Dosierer 47 gegenüberliegenden Seite der Adapterplatte 24 angeordnet und münden in den Aufnahmeraum 49. Die Adapterplatte 24 ist dichtend und klemmend zwischen dem Vorratsbehälter 4 und dem Halteflansch 38 gehalten, wodurch der Aufnahmeraum 49 abgedichtet ist. Der Aufnahmeraum 49 dichtet mit seinen Wänden den Vorlaufabschnitt 15 und den Rücklaufabschnitt 17 ab. Gleichzeitig sind die im Halteflansch 38 verlaufenden Teile der Vorlaufleitung 16 und der Rücklaufleitung 18 durch den Adapter 8 strömungs- und druckdicht verschlossen.

Im gezeigten Ausführungsbeispiel ist der Feststoffkanal 12 durch den Adapter 8 und den Halteflansch 38 hindurchgeführt, wodurch auch bei ausgebauter Adapterplatte 24 der Feststoffkanal 12 - ggf. mit einem vom Halteflansch 38 fortführenden Schlauchabschnitt - dauerhaft angeschlossen ist. Es kann auch zweckmäßig sein, den Feststoffkanal 12 direkt aus der Adapterplatte 24 herauszuführen, wobei eine geeignete Schlauchleitung oder dgl. mit der Adapterplatte 24 verbunden ist. Sinngemäß das Gleiche gilt auch für den Flüssigkeitskanal 10.

Fig. 9 zeigt noch die Anordnung nach Fig. 8, bei der die Adapterplatte 24 bezogen auf die in Fig. 4 dargestellte Mittellinie 25 um 180° gedreht angeordnet ist. Der Dosierer 47 ist umgekehrt nach unten ragend im Aufnahmeraum 49 aufbewahrt. Der in der Adapterplatte 24 angeordnete Kanalabschnitt 11 des Feststoffkanals 12 ist durch den Boden 20 und den Aufnahmeraum 49 verschlossen und abgedichtet. Der im Halteflansch 38 angeordnete Teil des Feststoffkanals 12 ist durch die Adapterplatte 24 strömungs- und druckdicht verschlossen. Gleichzeitig münden die Vorlaufleitung 16 und die Rücklaufleitung 18 über den jeweiligen Vorlaufabschnitt 15 bzw. Rücklaufabschnitt 17 in den Innenraum 13, wobei die Öffnung 43 im Boden 20 als gemeinsame Flüssigkeitsöffnung 22 für die Vorlaufleitung 16 und die Rücklaufleitung 18 wirkt. Das im Innenraum 13 bevorratete flüssige Sprühmittel kann entsprechend der Darstellung nach Fig. 1 gefördert und ausgetragen werden.

Der Vorratsbehälter 4 ist mittels der Schnellverschlüsse 37 direkt an der Gebläseeinheit 3 befestigt, wobei die Adapterplatte 24 unter Einwirkung der Spannkraft der Schnellverschlüsse 37 zwischen dem Boden 20 des Vorratsbehälters 4 und dem Halteflansch 38 der Gebläseeinheit 3 klemmend gehalten ist.

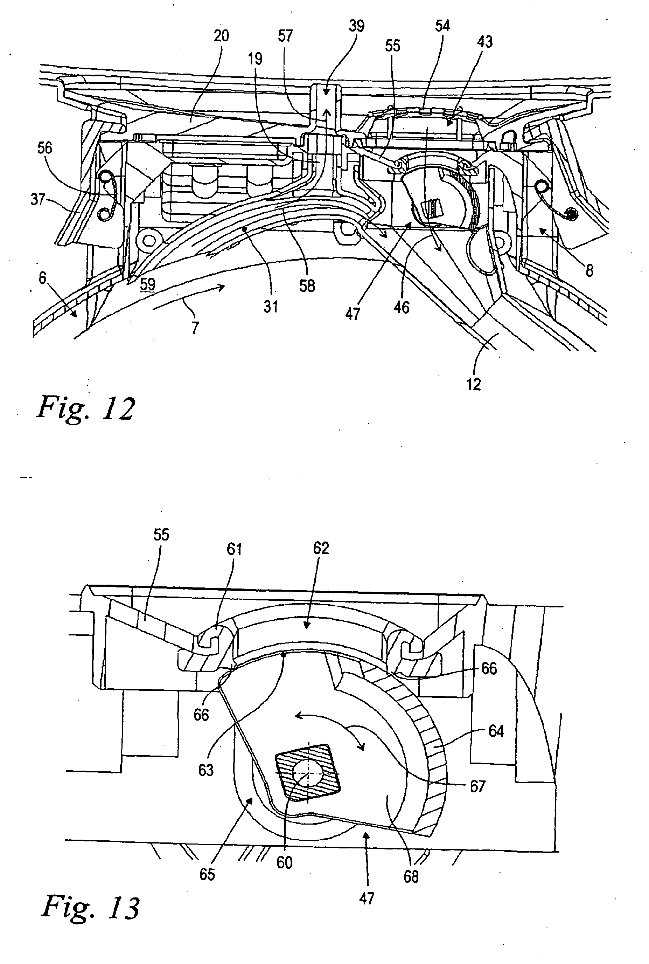

Fig. 10 zeigt eine Rückansicht eines weiteren Ausführungsbeispiels der Erfindung im Bereich des Vorratsbehälters 4, der zur Montage in zwei verschiedenen, gegeneinander um 180° um die Hochachse 40 verdrehten Positionen am gerätefesten Adapter 8 vorgesehen ist. Hierzu weist der Behälter 40 einen Boden 20 auf, der als in den Fig. 11 und 12 näher dargestelltes Einzelteil gefertigt und fest mit dem Behälterabschnitt des Vorratsbehälters 4 verbunden ist. Hierzu kann eine Verklebung, Verschweißung, Verschraubung oder auch eine einteilige Ausführung zweckmäßig sein.

Der Adapter 8 ist fest mit dem Gebläse 6 verbunden. Auch hier kann eine Verklebung, Verschweißung, Verschraubung oder dgl. vorteilhaft sein. Zwischen dem Boden 20 des Vorratsbehälters 4 und dem Adapter 8 des Gebläses 6 verläuft eine Trennebene 72, die von zwei seitlichen Schnellverschlüssen 37 übergriffen wird. Die Schnellverschlüsse 37 sind seitlich fest am Adapter 8 montiert und greifen in entsprechende Aufnahmen des Bodens 20 ein. Nach Lösen der Schnellverschlüsse 37 kann die Baueinheit des Vorratsbehälters 4 mit dem Boden 20 entlang der Trennebene 72 von der Baueinheit aus dem Gebläse 6 und dem Adapter 8 abgenommen, um 180° um die Hochachse 40 gedreht und wieder befestigt werden. Es kann auch zweckmäßig sein, den Boden 20 beispielsweise mittels einer Verschraubung oder mittels Schnellverschlüssen lösbar am übrigen Vorratsbehälter 4 zu befestigen. In diesem Fall kann ein Umbau zwischen Stäube- und Sprühbetrieb auch dadurch erfolgen, daß allein der Boden 20 um 180° gedreht wird, während die übrigen Komponenten ihre relative Einbaulage zueinander behalten.

Fig. 11 zeigt in einer perspektivischen Explosionsdarstellung Einzelheiten der Anordnung nach Fig. 10, wobei der Boden 20 der besseren Übersichtlichkeit halber losgelöst vom übrigen Behälterabschnitt des Vorratsbehälters 4 (Fig. 10) gezeigt ist. Der Boden 20 weist entsprechend der Darstellung nach Fig. 3 eine Mittellinie 21 und eine Hochachse 40 auf. Koaxial zur Hochachse 40 ist ein Rohrstutzen einteilig mit dem Boden 20 ausgebildet, der die Drucköffnung 39 für eine Druckbeaufschlagung des Vorratsbehälters 4 umschließt.

Einseitig neben der Mittellinie 21 ist eine Öffnung 43 in den Boden 20 eingeformt, die teilweise durch ein Sieb 54 abgedeckt ist. In Übereinstimmung mit der Ausführung nach den Fig. 8 und 9 ist das Sieb 54 Teil eines Dosierers 47 für ein Stäubemittel. Abweichend von der Darstellung nach den Fig. 8 und 9 ist das Sieb 54 jedoch mittels Streben 48 am Boden 20 befestigt und dabei einteilig als Spritzgußteil ausgeformt. Die Öffnung 43 bildet in Übereinstimmung mit der Ausführung nach den Fig. 8 und 9 je nach Einbaulage des Bodens 20 eine Feststoffentnahmeöffnung 23 (Fig. 8) oder eine Flüssigkeitsöffnung 22 (Fig. 9).

Der Adapter 8 weist in Übereinstimmung mit der Darstellung nach Fig. 4 eine Mittellinie 25 und eine Hochachse 41 auf. Auf der oberen, dem Boden 20 zugewandten Flachseite des Adapters 8 sind beidseitig der Mittellinie 25 und rotationssymmetrisch zur Hochachse 41 zwei Vertiefungen 73, 75 eingeformt, die einen identischen, näherungsweise rechteckigen Grundriß aufweisen und ringsum durch einen Rahmen 74, 76 umschlossen sind. Die Vertiefung 75 ist Teil des Kanalabschnitts 11 vom Feststoffkanal 12 (Fig. 12). In die Vertiefung 73 münden der Vorlaufabschnitt 15 der Vorlaufleitung 16 (Fig. 1) und der Rücklaufabschnitt 17 der Rücklaufleitung 18 (Fig. 1). Koaxial zu den Hochachsen 41, 40 ist noch der Kanalabschnitt 19 des Druckluftkanals 31 (Fig. 2) durch den Adapter 8 hindurchgeführt, wie er im Zusammenhang mit den Fig. 3 bis 6 weiter oben beschrieben ist.

Der im wesentlichen rechteckig ausgeformte Boden 20 weist auf seiner dem Adapter 8 zugewandten Unterseite im Bereich seiner vier Ecken je einen Zapfen 52 auf, die im montierten Zustand in je eine zugeordnete Zentrieröffnung 53 des Adapters 8 eingreifen. Nach Befestigung des Bodens 20 mittels der beiden Schnellverschlüsse 37 am Adapter 8 ist der Boden 20 dadurch gegenüber dem Adapter 8 derart ausgerichtet, daß die beiden Hochachsen 40, 41 koaxial zueinander liegen und die Drucköffnung 39 druck- und strömungsleitend mit dem Kanalabschnitt 19 verbunden ist. Die beiden Mittellinien 21, 25 liegen parallel zueinander.

Des weiteren ist in der gezeigten, für den Stäubebetrieb vorgesehenen Einbaulage eine Überdeckung der Öffnung 43 mit dem Kanalabschnitt 11 des Feststoffkanals 12 (Fig. 12) gegeben. Der umlaufende Rahmen 76 dichtet dabei die Vertiefung 75 mit dem Kanalabschnitt 11 gegen die Unterseite des Bodens 20 ab. Die im Grundriß den beiden Vertiefungen 73, 75 entsprechende Öffnung 43 geht druckdicht und strömungsleitend in den Kanalabschnitt 11 über. Ein im Vorratsbehälter 4 (Fig. 10) bereitgestelltes Stäubemittel kann durch die Öffnung 43 und den Kanalabschnitt 11 hindurch in den Gebläseluftstrom 7 (Fig. 1) gefördert werden. Zur Steuerung der Austragsmenge des Stäubemittels ist im Kanalabschnitt 11 des Adapters 8 noch ein weiterer Teil des Dosierers 47 angeordnet, der weiter unten im Zusammenhang mit den Fig. 12 und 13 näher beschrieben wird.

Ein Umbau von dem hier gezeigten Stäubebetrieb in den zum Austrag von flüssigen Sprühmitteln aus dem gleichen Vorratsbehälter 4 (Fig. 10) vorgesehenen Sprühbetrieb wird der Vorratsbehälter 4 (Fig. 10) einschließlich seines Bodens 20 um die Hochachse 40 herum um 180° gedreht und anschließend mittels der Schnellverschlüsse 37 gegenüber dem Adapter 8 fixiert. Hierbei liegt die als Flüssigkeitsöffnung 22 (Fig. 9) dienende Öffnung 43 in Überdeckung mit der Vertiefung 73, wobei eine druck- und flüssigkeitsdichte Abdichtung durch den Rahmen 74 hergestellt ist. Der Vorlaufabschnitt 15 und der Rücklaufabschnitt 17 münden in die Öffnung 43. Die Verbindung zwischen der Drucköffnung 39 und dem Kanalabschnitt 19 bleibt bestehen. Die Funktionsweise des Sprühbetriebes entspricht der Darstellung nach Fig. 9.

Fig. 12 zeigt eine Querschnittsdarstellung der Anordnung nach den Fig. 10 und 11 im Bereich des Adapters 8 und des Bodens 20 in der für den Stäubebetrieb vorgesehenen Montageposition. Die beiden Schnellverschlüsse 37 sind als Spannklammern mit Federklammern 56 ausgebildet, die den Boden 20 unter Federvorspannung fest gegen den Adapter 8 drücken.

Das als Radialgebläse ausgeführte Gebläse 6 fördert innerhalb der Gebläsespirale einen in Umfangsrichtung verlaufenden Gebläseluftstrom 7, wobei sich radial außerhalb nahe der Umfangswand der Gebläsespirale ein Überdruckbereich 59 ausbildet. Angrenzend an den Überdruckbereich 59 ist der Druckluftkanal 31 aus der Umfangswand der Gebläsespirale in einem flachen Winkel mit geringer radialer Richtungskomponente herausgeführt und zweigt vom Gebläseluftstrom 7 einen Tragluftstrom 58 ab. Der Druckluftkanal 31 mündet in den Feststoffkanal 12 und leitet den Tragluftstrom 58 in den Feststoffkanal 12 ein. Des weiteren zweigt vom Druckluftkanal 31 der Kanalabschnitt 19 ab, über den ein Teilstrom 57 des Tragluftstromes 58 durch die Drucköffnung 39 in den Vorratsbehälter 4 (Fig. 10) eingeleitet wird.

Der Tragluftstrom 58 ist stromab des Dosierers 47 in den Feststoffkanal 12 eingeführt. Infolge seiner hohen Strömungsgeschwindigkeit und des damit einhergehenden geringen Luftdruckes kann er stromab des Dosierers 47 einen Venturi-Effekt bewirken, der das pulver- oder granulatförmige Stäubemittel aus dem Vorratsbehälter 4 (Fig. 10) durch das Sieb 54, die Öffnung 43 und weitere, weiter unten im Zusammenhang mit Fig. 13 näher beschriebene Komponenten des Dosierers 47 hindurch entlang eines Pfeils 46 ansaugt und durch den Feststoffkanal 12 in das Blasrohr 27 (Fig. 1) einträgt. Die vorgenannte Förderung des Stäubemittels wird unterstützt durch einen Überdruck im Vorratsbehälter 4 infolge des durch die Drucköffnung 39 eingeleiteten Teilstromes 57. Es kann auch zweckmäßig sein, in der Stäubekonfiguration auf den Teilstrom 57 zu verzichten, indem allein im Sprühbetrieb die Drucköffnung 39 mit dem Kanalabschnitt 19 (Fig. 11) in Überdeckung liegt.

Fig. 13 zeigt eine vergrößerte Detailansicht des Dosierers 47 nach Fig. 12. In Übereinstimmung mit der Darstellung nach Fig. 12 schließt sich unterhalb an die Öffnung 43 ein in den Adapter 8 eingeformter, und die Vertiefung 75 (Fig. 11) bildender Trichter 55 an. Der Trichter 55 ist auf seiner Unterseite mit einem Dosierfenster 62 versehen, welches ringsherum durch einen Dichtrahmen 61 aus einem elastischen Material eingefaßt ist. Unterhalb des Dichtrahmens 61 ist als Teil der Dosiereinrichtung 47 ein Dosierkörper 68 angeordnet, der um eine Schwenkachse 60 in Richtung eines Doppelpfeiles 67 verschwenkbar gelagert ist. Der im Querschnitt U-förmige Dosierkörper 68 weist eine teilzylindrische Umfangswand 64 auf, an die sich im Umfangsrichtung ein freier Bereich 63 anschließt. Umlaufende Dichtlippen 66 des Dichtrahmens 61 liegen am Dosierkörper 68 und je nach dessen Schwenkwinkelstellung an seiner teilzylindrischen Umfangswand 64 an. Abhängig von der Schwenkwinkelstellung des Dosierkörpers 68 steht das Dosierfenster 62 mit einem mehr oder weniger größeren Teil des freien Bereichs 63 bzw. der teilzylindrischen Umfangswand 64 in Überdeckung. Der Schwenkwinkelbereich des Dosierkörpers 68 reicht von einer Stellung, in der das Dosierfenster 62 vollständig in Überdeckung mit dem freien Bereich 63 liegt, bis zu einer Schwenkstellung, in der das Dosierfenster 62 vollständig durch die teilzylindrische Umfangswand 64 verschlossen ist. Es ist ein Drehschieber 65 gebildet, mit dem sich abhängig von seiner Schwenkwinkelstellung entsprechend dem Doppelpfeil 67 die Durchflußmenge des Stäubemittels entlang des Pfeils 46 (Fig. 12) stufenlos einstellen läßt.

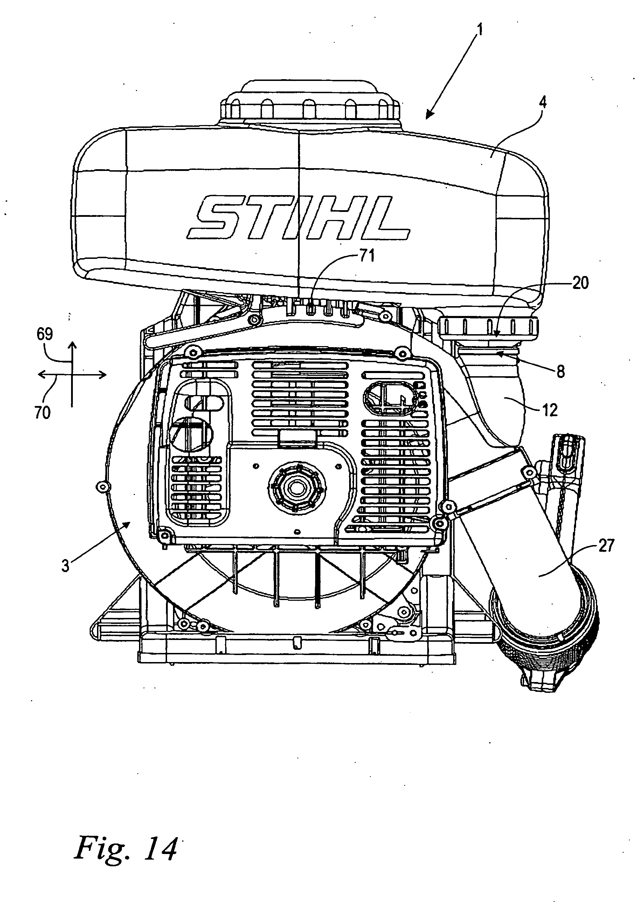

Fig. 14 zeigt noch eine Rückansicht eines weiteren Ausführungsbeispiels des erfindungsgemäß ausgeführten Sprühgerätes 1. Das Sprühgerät 1 ist in seiner gewöhnlichen Arbeitshaltung gezeigt, wodurch eine Hochrichtung 69 und eine Seitenrichtung 70 vorgeben ist. Die Hochrichtung 69 und die Seitenrichtung 70 verlaufen in der Drehebene der als Radialgebläse ausgebildeten Gebläseeinheit 3.

Im gezeigten Ausführungsbeispiel ist abweichend von der Ausführung nach den Fig. 10 bis 13 der Adapter 8 bezogen auf die Seitenrichtung 70 nicht mittig, sondern seitlich versetzt angeordnet. Das Gleiche gilt für den Boden 20 des Behälters 4: Ein im Detail nicht näher dargestellter Boden 20, der in seiner Ausführung prinzipiell dem Boden 20 nach den Fig. 3 bis 7, den Fig. 8 und 9 oder den Fig. 10 bis 13 entsprechen kann, ist ebenfalls bezogen auf die Seitenrichtung 70 seitlich zur Mitte der Gebläseeinheit 3 angeordnet.

Die Gebläseeinheit 3 weist bezogen auf die Hochrichtung 69 einen höchsten Punkt 71 auf, der bezogen auf die Seitenrichtung 70 mittig zur Gebläseeinheit 3 liegt. Der Behälter 1 ist direkt ohne nennenswerten Zwischenraum oberhalb des höchsten Punktes 71 angeordnet. Der Adapter 8 und der Boden 20 sind bezogen auf die Seitenrichtung 70 seitlich und bezogen auf die Hochrichtung 69 unterhalb des höchsten Punktes 71 angeordnet. Es kann auch eine Ausführung zweckmäßig sein, bei der nur der Adapter 8, nicht jedoch der Boden 20 unterhalb des höchsten Punktes 71 vorgesehen ist. Unterhalb des Adapters 8 schließt sich der Feststoffkanal 12 an, der seitlich der Gebläsespirale der Gebläseeinheit 3 in den Ausblaskrümmer nahe dem Anschluß des Blasrohres 27 einmündet. Hierdurch ist die Bauhöhe des Sprühgerätes 1 und damit die Höhe des Gesamtmassenschwerpunkts verringert.

## Patentansprüche

1. Tragbares Sprühgerät (1), mit einem Rückentragegestell (2), an dem eine Gebläseeinheit (3) und ein Vorratsbehälter (4) für einen auszubringenden Stoff befestigt sind, wobei die Gebläseeinheit (3) einen Antriebsmotor (5) und ein vom Antriebsmotor (5) angetriebenes Gebläse (6) umfaßt, wobei das Sprühgerät (1) zum wahlweisen Ausbringen von flüssigen Sprühmitteln und feststofförmigen Stäubemitteln mit einem vom Gebläse (6) erzeugten Gebläseluftstrom (7) vorgesehen ist,
**dadurch gekennzeichnet, daß** ein lösbar mit dem Vorratsbehälter (4) verbundener Adapter (8) vorgesehen ist, der mindestens einen Kanalabschnitt (9) eines Flüssigkeitskanals (10) für das flüssige Sprühmittel sowie einen Kanalabschnitt (11) eines Feststoffkanals (12) für das feststofförmige Stäubemittel aufweist, wobei der Flüssigkeitskanal (10) und der Feststoffkanal (12) in den Gebläseluftstrom (7) münden, und daß verschiedene Einbaulagen des Vorratsbehälters (4) und des Adapters (8) relativ zueinander bzw. zur Gebläseeinheit (3) seitens des Benutzers frei wählbar sind, wobei in einer Einbaulage der Flüssigkeitskanal (10) über dessen Kanalabschnitt (9) und in einer anderen Einbaulage der Feststoffkanal (12) über dessen Kanalabschnitt (11) mit einem Innenraum (13) des Vorratsbehälters (4) in Verbindung steht.

2. Sprühgerät nach Anspruch 1,
**dadurch gekennzeichnet, daß** im Flüssigkeitskanal (10) eine Druckpumpe (14) angeordnet ist, daß der Flüssigkeitskanal (10) eine Vorlaufleitung (16) und eine Rücklaufleitung (18) für die Druckpumpe (14) umfaßt, und daß der Adapter (8) zwei Kanalabschnitte (9) des Flüssigkeitskanals (10) aufweist, die durch einen Vorlaufabschnitt (15) der Vorlaufleitung (16) und einen Rücklaufabschnitt (17) der Rücklaufleitung (18) gebildet sind.

3. Sprühgerät nach Anspruch 1 oder 2,
**dadurch gekennzeichnet, daß** in der Einbaulage, in der der Flüssigkeitskanal (10) mit dem Innenraum (13) in Verbindung steht, der Kanalabschnitt (11) des Feststoffkanals (12) verschlossen ist, und daß in der Einbaulage, in der der Feststoffkanal (12) mit dem Innenraum (13) in Verbindung steht, der Kanalabschnitt (9) des Flüssigkeitskanals (10) verschlossen ist.

4. Sprühgerät nach einem der Ansprüche 1 bis 3,
**dadurch gekennzeichnet, daß** der Adapter (8) einen Kanalabschnitt (19) eines Druckluftkanals (31) aufweist, der von einem Überdruckbereich (59) des Gebläses (6) mit Luftdruck gespeist ist, wobei der Druckluftkanal (31) über dessen Kanalabschnitt (19) zumindest in der für den Sprühbetrieb vorgesehenen relativen Einbaulage und insbesondere in beiden relativen Einbaulagen des Adapters (8) und des Vorratsbehälters (4) zueinander mit dem Innenraum (13) druckübertragend verbunden ist.

5. Sprühgerät nach einem der Ansprüche 1 bis 4,
**dadurch gekennzeichnet, daß** der Vorratsbehälter (4) einen Boden (20) mit einer Mittellinie (21) aufweist, wobei eine dem Kanalabschnitt (9) des Flüssigkeitskanals (10) zugeordnete Flüssigkeitsöffnung (22) und eine dem Kanalabschnitt (11) des Feststoffkanals (12) zugeordnete Feststoffentnahmeöffnung (23) des Bodens (20) auf der gleichen Seite der Mittellinie (21) angeordnet sind, und daß der Adapter (8) eine Mittellinie (25, 26) aufweist, wobei der Kanalabschnitt (9) des Flüssigkeitskanals (10) und der Kanalabschnitt (11) des Feststoffkanals (12) auf verschiedenen Seiten der Mittellinie (25, 26) des Adapters (8) angeordnet sind.

6. Sprühgerät nach Anspruch 5,
**dadurch gekennzeichnet, daß** die Flüssigkeitsöffnung (22) und die Feststoffentnahmeöffnung (23) gemeinsam durch eine einzelne Öffnung (43) im Boden (20) des Vorratsbehälters (4) gebildet sind.

7. Sprühgerät nach einem der Ansprüche 1 bis 6,
**dadurch gekennzeichnet, daß** eine feste, unveränderliche Einbaulage des Vorratsbehälters (4) und zwei verschiedene Einbaulagen des Adapters (8) vorgesehen sind.

8. Sprühgerät nach Anspruch 7,
**dadurch gekennzeichnet, daß** der Adapter (8) als separate Adapterplatte (24) ausgeführt ist, deren beiden verschiedenen Einbaulagen durch Drehung der Adapterplatte (24) um eine ihrer Mittellinien (25, 26) oder um ihre Hochachse (41) gebildet sind.

9. Sprühgerät nach Anspruch 7 oder 8,
**dadurch gekennzeichnet**, der Vorratsbehälter (4) unter Zwischenlage der Adapterplatte (24) lösbar direkt mit der Gebläseeinheit (3) verbunden ist.

10. Sprühgerät nach einem der Ansprüche 1 bis 6,
**dadurch gekennzeichnet, daß** eine feste, unveränderliche Einbaulage des Adapters (8) und zwei verschiedene Einbaulagen des Vorratsbehälters (4) vorgesehen sind.

11. Sprühgerät nach Anspruch 10,
**dadurch gekennzeichnet**, der Adapter (8) fest mit der Gebläseeinheit (3) verbunden ist, und daß der Vorratsbehälter (4) lösbar direkt mit dem Adapter (8) verbunden ist.

12. Sprühgerät nach einem der Ansprüche 1 bis 11,
**dadurch gekennzeichnet, daß** bezogen auf eine gewöhnliche Arbeitshaltung des Sprühgerätes (1) eine Hochrichtung (69) und eine durch die Drehebene der als Radialgebläses ausgebildeten Gebläseeinheit (3) definierte Seitenrichtung (70) vorgegeben ist, wobei der Adapter (8) und insbesondere auch der Boden (20) des Vorratsbehälters (4) bezogen auf die Hochrichtung (69) und die Seitenrichtung (70) seitlich und unterhalb eines höchsten Punktes (71) der Gebläseeinheit (3) angeordnet sind.

13. Sprühgerät nach einem der Ansprüche 1 bis 12,
**dadurch gekennzeichnet, daß** ein Dosierer (47) für das Stäubemittel vorgesehen ist, der als Drehschieber (65) ausgeführt ist.

14. Sprühgerät nach einem der Ansprüche 1 bis 13,
**dadurch gekennzeichnet, daß** stromab eines Dosierers (47) für das Stäubemittel ein Tragluftstrom (58) in den Feststoffkanal (12) geführt ist.

## Claims

1. Portable sprayer (1), comprising a back carrying frame (2) to which are attached a blower unit (3) and a reservoir (4) for a material to be discharged, wherein the blower unit (3) comprises a drive motor (5) and a blower (6) driven by the drive motor (5), the sprayer (1) being provided for optionally discharging liquid spray and solid dusting agent with a blower air flow (7) generated by the blower (6), **characterised in that** an adapter (8) detachably connected to the reservoir (4) is provided, which adapter (8) has at least one passage section (9) of a liquid passage (10) for the liquid spray and a passage section (11) of a solid passage (12) for the solid dusting agent, wherein the liquid passage (10) and the solid passage (12) terminate into the blower air flow (7), and **in that** various installation positions of the reservoir (4) and the adapter (8) relative to each other and/or to the blower unit (3) are freely selectable by the user, wherein in one installation position the liquid passage (10) is connected to an interior (13) of the reservoir (4) via its passage section (9) and in another installation position the solid passage (12) is connected thereto via its passage section (11).

2. Sprayer according to claim 1,
**characterised in that** a hydraulic pump (14) is provided in the liquid passage (10), **in that** the liquid passage (10) comprises a supply line (16) and a return line (18) for the hydraulic pump (14), and **in that** the adapter (8) comprises two passage sections (9) of the liquid passage (10), which are represented by a supply section (15) of the supply line (16) and a return section (17) of the return line (18).

3. Sprayer according to claim 1 or 2,
**characterised in that**, in the installation position in which the liquid passage (10) is connected to the interior (13), the passage section (11) of the solid passage (12) is closed, and **in that**, in the installation position in which the solid passage (12) is connected to the interior (13), the passage section (9) of the liquid passage (10) is closed.

4. Sprayer according to any of claims 1 to 3,
**characterised in that** the adapter (8) comprises a passage section (19) of a compressed air passage (31) which is supplied with air pressure from a positive pressure region (59) of the blower (6), wherein the compressed air passage (31) is connected to the interior (13) for the transmission of pressure at least in the relative installation position provided for spraying operation and in particular in both relative installation positions of the adapter (8) and the reservoir (4).

5. Sprayer according to any of claims 1 to 4,
**characterised in that** the reservoir (4) has a base (20) with a central line (21), wherein a liquid opening (22) assigned to the passage section (9) of the liquid passage (10) and a solid discharge opening (23) assigned to the passage section (11) of the solid passage (12) are situated on the same side of the central line (21) of the base (20), and **in that** the adapter (8) has a central line (25, 26), wherein the passage section (9) of the liquid passage (10) and the passage section (11) of the solid passage (12) are situated on different sides of the central line (25, 26) of the adapter (8).

6. Sprayer according to claim 5,
**characterised in that** the liquid opening (22) and the solid discharge opening (23) are jointly represented by a single opening (43) in the base (20) of the reservoir (4).

7. Sprayer according to any of claims 1 to 6,
**characterised in that** a fixed, unchangeable installation position of the reservoir (4) and two different installation positions of the adapter (8) are provided.

8. Sprayer according to claim 7,
**characterised in that** the adapter (8) is designed as a separate adapter plate (24), the two different installation positions of which are obtained by rotating the adapter plate (24) about one of its central lines (25, 26) or about its vertical axis (41).

9. Sprayer according to claim 7 or 8,
**characterised in that** the reservoir (4) is releasably connected directly to the blower unit (3) with the interposition of the adapter plate (24).

10. Sprayer according to any of claims 1 to 6,
**characterised in that** a fixed, unchangeable installation position of the adapter (8) and two different installation positions of the reservoir (4) are provided.

11. Sprayer according to claim 10,
**characterised in that** the adapter (8) is permanently connected to the blower unit (3) and the reservoir (4) is releasably connected directly to the adapter (8).

12. Sprayer according to any of claims 1 to 11,
**characterised in that**, with respect to a normal working position of the sprayer (1), a vertical direction (60) and a lateral direction (7) defined by the plane of rotation of the blower unit (3), which is designed as a centrifugal blower, are preset, wherein the adapter (8) and in particular the base (20) of the reservoir (4) are located at the side and below a highest point (71) of the blower unit (3) with respect to the vertical direction (69) and the lateral direction (70).

13. Sprayer according to any of claims 1 to 12,
**characterised in that** a metering unit (47) designed as a rotary valve (65) is provided for the dusting agent.

14. Sprayer according to any of claims 1 to 13,
**characterised in that** a carrier air flow (12) for the dusting agent is routed into the solid passage (12) downstream of a metering unit (47).

## Revendications

1. Pulvérisateur portable (1) avec un châssis porteur dorsal (2) auquel sont fixés une unité soufflante (3) et un réservoir (4) pour un produit à appliquer, étant précisé que l'unité soufflante (3) comprend un moteur d'entraînement (5) et une soufflante (6) entraînée par le moteur d'entraînement (5), et que le pulvérisateur (1) est destiné à appliquer sélectivement des produits de pulvérisation liquides et des produits de poudrage solides avec un courant d'air de soufflante (7) produit par la soufflante (6),
**caractérisé en ce qu'**il est prévu un adaptateur (8) qui est relié de manière amovible au réservoir (4) et qui comporte au moins une section (9) d'un conduit de liquide (10) pour le produit de pulvérisation liquide, et une section (11) d'un conduit de produit solide (12) pour le produit de poudrage solide, étant précisé que le conduit de liquide (10) et le conduit de solide (12) débouchent dans le courant d'air de soufflante (7), et **en ce que** différentes positions de montage du réservoir (4) et de l'adaptateur (8) l'un par rapport à l'autre ou par rapport à l'unité de soufflante (3) peuvent être choisies librement côté utilisateur, étant précisé que dans une position de montage, le conduit de liquide (10) communique avec un espace intérieur (13) du réservoir (4) par l'intermédiaire de sa section (9) tandis que dans une autre position de montage, c'est le conduit de solide (12) qui communique avec l'espace intérieur (13) du réservoir (4) par l'intermédiaire de sa section (11).

2. Pulvérisateur selon la revendication 1,
**caractérisé en ce qu'**une pompe refoulante (14) est disposée dans le conduit de liquide (10), **en ce que** le conduit de liquide (10) comprend une canalisation montante (16) et une canalisation descendante (18) pour la pompe refoulante (14), et **en ce que** l'adaptateur (8) comporte deux sections (9) du conduit de liquide (10) qui sont formées par une section montante (15) de la canalisation montante (16) et par une section descendante (17) de la canalisation descendante (18).

3. Pulvérisateur selon la revendication 1 ou 2,
**caractérisé en ce que** dans la position de montage dans laquelle c'est le conduit de liquide (10) qui communique avec l'espace intérieur (13), la section (11) du conduit de solide (12) est fermée, et **en ce que** dans la position de montage dans laquelle c'est le conduit de solide (12) qui communique avec l'espace intérieur (13), la section (9) du conduit de liquide (10) est fermée.

4. Pulvérisateur selon l'une des revendications 1 à 3,
**caractérisé en ce que** l'adaptateur (8) comporte une section (19) d'un conduit d'air comprimé (31) qui est alimentée en pression d'air par une zone de surpression (59) de la soufflante (6), étant précisé que le conduit d'air comprimé (33) est relié à l'espace intérieur (13) pour transmettre la pression par l'intermédiaire de sa section (19) au moins dans la position de montage relative prévue pour la pulvérisation, et en particulier dans les deux positions de montage relatives de l'adaptateur (8) et du réservoir (4) l'un par rapport à l'autre.

5. Pulvérisateur selon l'une des revendications 1 à 4,
**caractérisé en ce que** le réservoir (4) présente un fond (20) avec un axe médian (21), étant précisé qu'une ouverture de liquide (22) associée à la section (9) du conduit de liquide (10) et une ouverture de prélèvement de solide (23) du fond (20) associée à la section (11) du conduit de solide (12) sont disposées du même côté de l'axe médian (21), et **en ce que** l'adaptateur (8) présente un axe médian (25, 26), étant précisé que la section (9) du conduit de liquide (10) et la section (11) du conduit de solide (12) sont disposées sur des côtés différents de l'axe médian (25, 26) de l'adaptateur (8).

6. Pulvérisateur selon la revendication 5,
**caractérisé en ce que** l'ouverture de liquide (22) et l'ouverture de prélèvement de solide (23) sont formées conjointement par une ouverture individuelle (43) du fond (20) du réservoir (4).

7. Pulvérisateur selon l'une des revendications 1 à 6,
**caractérisé en ce qu'**il est prévu une position fixe, invariable, du réservoir (4), et deux positions de montage différentes de l'adaptateur (8).

8. Pulvérisateur selon la revendication 7,
**caractérisé en ce que** l'adaptateur (8) est réalisé sous la forme d'une plaque d'adaptateur (24) séparée dont les deux positions de montage différentes sont formées grâce à une rotation de ladite plaque (24) sur l'un de ses axes médians (25, 26) ou sur son axe vertical (41).

9. Pulvérisateur selon la revendication 7 ou 8,
**caractérisé en ce que** le réservoir (4) est relié directement, de manière amovible, à l'unité soufflante (3), avec la plaque d'adaptateur (24) entre les deux.

10. Pulvérisateur selon l'une des revendications 1 à 6,
**caractérisé en ce qu'**il est prévu une position fixe, invariable, de l'adaptateur (8), et deux positions de montage différentes du réservoir (4).

11. Pulvérisateur selon la revendication 10,
**caractérisé en ce que** l'adaptateur (8) est relié de manière fixe à l'unité de soufflante (3) et **en ce que** le réservoir (4) est relié directement, de manière amovible, à l'adaptateur (28).

12. Pulvérisateur selon l'une des revendications 1 à 11,
**caractérisé en ce que** par rapport à une position de travail habituelle du pulvérisateur (1) sont prédéfinis un sens vertical (69) et un sens latéral (70) défini par le plan de rotation de l'unité soufflante (3) conçue comme une soufflante radiale, étant précisé que l'adaptateur (8) et aussi, en particulier, le fond (20) du réservoir (4) sont disposés latéralement et au-dessous d'un point le plus haut (71) de l'unité soufflante (3), par rapport au sens vertical (69) et au sens latéral (70).

13. Pulvérisateur selon l'une des revendications 1 à 12,
**caractérisé en ce qu'**il est prévu un doseur (47) pour le produit de poudrage, qui est réalisé sous la forme d'une vanne rotative (65).

14. Pulvérisateur selon l'une des revendications 1 à 13,
**caractérisé en ce qu'**en aval d'un doseur (47) pour le produit de poudrage, un courant d'air porteur (58) mène au conduit de solide (12).
